(19) Europäisches Patentamt
European Patent Office
Office européen des brevets

(11) **EP 3 656 034 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **17764341.8**

(22) Anmeldetag: **24.08.2017**

(51) Int Cl.:
**H02J 3/38** *(2006.01)*     **H02J 3/46** *(2006.01)*
**H02J 13/00** *(2006.01)*

(86) Internationale Anmeldenummer:
**PCT/EP2017/071317**

(87) Internationale Veröffentlichungsnummer:
**WO 2019/037853 (28.02.2019 Gazette 2019/09)**

(54) **AUTARKER BETRIEB EINER ENERGIE-BEREITSTELLUNGSVORRICHTUNG**

AUTONOMOUS OPERATION OF AN ENERGY SUPPLY DEVICE

FONCTIONNEMENT AUTARCIQUE D'UN DISPOSITIF DE PRÉPARATION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.05.2020 Patentblatt 2020/22**

(73) Patentinhaber: **Siemens Aktiengesellschaft
80333 München (DE)**

(72) Erfinder: **WEIDAUER, Jens
90763 Fürth (DE)**

(56) Entgegenhaltungen:
**EP-A2- 2 947 743    WO-A2-2009/036895**

**Beschreibung**

Die vorliegende Erfindung betrifft eine Energie-Bereitstel-lungsvorrichtung zum Bereitstellen von elektrischer Leistung bzw. Energie für ein Stromnetz bzw. für die an dem Stromnetz angeschlossenen elektrischen Verbraucher sowie ein Energie-Bereitstellungssystem mit mehreren solchen Energie-Bereitstellungsvorrichtungen. Ferner betrifft die vorliegende Erfindung ein Verfahren zum Bereitstellen von elektrischer Leistung bzw. Energie.

Hybride Energie-Bereitstellungssysteme kombinieren typischerweise mehrere unterschiedliche Energie-Bereitstellungsvorrichtungen um möglichst zuverlässig und bevorzugt unter Ausnutzung von regenerativer Energie ein elektrisches Stromnetz mit elektrischer Energie bzw. Leistung zu versorgen bzw. um ein elektrisches Inselnetz zu bilden und die daran angeschlossenen elektrischen Verbraucher zuverlässig und auf effiziente Weise mit elektrischer Leistung bzw. Energie zu versorgen. Typische Energie-Bereitstellungsvorrichtungen, die in unterschiedlichen Kombinationen verschiedenste Konfigurationen von Energie-Bereitstellungssystemen bilden können, sind (a) (Diesel)-Generatoren, (b) (Block)-Heizkraft-werke, (c) Photovoltaikanlagen, (d) Windenergieanlagen, und (e) elektrische Energiespeicher mit Batterien bzw. Akkumulatoren, wobei diese Aufzählung jedoch nicht abschließend ist. Die Energie-Bereitstellungsvorrichtungen (a) bis (d) sind Energie-Erzeugungsvorrichtungen, welche eine nicht-elektrische Primärenergie in elektrische Energie umwandeln. Die Energie-Bereitstellungsvorrichtung (e) muss zunächst mit erzeugter elektrischer Energie gespeist bzw. geladen werden, bevor sie zu einem späteren Zeitpunkt, zu dem beispielsweise wenig regenerative Energie zur Verfügung steht und/oder die angeschlossenen elektrischen Verbraucher einen hohen Energiebedarf haben, die gespeicherte elektrische Energie abgeben können.

Ein Energie-Bereitstellungssystem weist häufig auch eine übergeordnete Steuereinheit auf. Diese sorgt insbesondere dafür, dass abhängig von (i) den Betriebszuständen der angeschlossenen Verbraucher bzw. deren aktuellen und/oder für die nähere Zukunft prognostizierten Energiebedarf und/oder (ii) den Betriebszuständen der Energie-Bereitstellungsvorrichtungen bzw. der elektrischen Leistung, welche diese aktuell und/oder (prognostiziert) in der näheren Zukunft bereitstellen können, die verschiedenen Energie-Bereitstellungsvorrichtungen steuert. Eine solche Steuerung umfasst insbesondere eine (gesteuerte oder geregelte) Einstellung der elektrischen Leistung, welche von der betreffenden Energie-Bereitstellungsvorrichtung mit dem Stromnetz ausgetauscht wird. Dabei kann die Menge an elektrischer Leistung kontinuierlich bzw. in kleinen Schritten eingestellt werden oder die betreffende Energie-Bereitstellungsvorrichtung kann komplett zu- bzw. abschaltet werden. Eine übergeordnete Steuereinheit wird häufig auch als (überlagertes) Leitsystem bezeichnet. Als Kriterien für eine Steuerung der Leistungsbereitstellung aus den verschiedenen Energie-Bereitstellungsvorrichtungen dienen in der Regel die Sicherstellung einer hohen Stabilität des betreffenden Stromnetzes sowie eine kostenoptimale Energieerzeugung.

Es ist jedoch möglich, dass eine Kommunikationsverbindung ausfällt, über welche Steuersignale für die Steuerung von zumindest einer Energie-Bereitstellungsvorrichtung übertragen werden. Dies führt zu einem unkontrollierten Betrieb der betreffenden Energie-Bereitstellungsvorrichtung, was die Stabilität des betreffenden Stromnetzes beeinträchtigt und damit die Versorgungssicherheit der Stromversorgung für die angeschlossenen Verbraucher gefährdet. Um die Auswirkungen von gestörten bzw. ausgefallenen Kommunikationsverbindungen zu minimieren, werden bei bekannten Energie-Bereitstellungssystemen die Kommunikationsverbindungen redundant ausgelegt. Dies bedeutet, dass für jede Kommunikationsverbindung zumindest zwei unabhängige Kommunikationswege vorgesehen sind. Eine Realisierung dieses Ansatzes ist jedoch mit erheblichen Zusatzkosten verbunden.

Ferner sind die Druckschriften WO 2009/036895 A2 und EP 2 947 743 A2 bekannt, die sich mit der Steuerung einer Energieerzeugung in Windenergieparks beschäftigen.

Der Erfindung liegt die Aufgabe zugrunde, die Versorgungssicherheit für elektrische Verbraucher, welche an einem Stromnetz angeschlossen sind, welches von einem vorstehend beschriebenen Energie-Bereitstellungssystem gespeist wird, auf einfache und effektive Weise zu verbessern.

Diese Aufgabe wird gelöst durch die Gegenstände der unabhängigen Patentansprüche. Vorteilhafte Ausführungsformen, weitere Merkmale und Details der vorliegenden Erfindung ergeben sich aus den abhängigen Ansprüchen, der Beschreibung und der Zeichnung. Dabei gelten Merkmale und Details, die im Zusammenhang mit den vorrichtungsbezogenen Ansprüchen beschrieben sind, selbstverständlich für die verfahrensbezogenen Ansprüche, und jeweils umgekehrt, so dass bezüglich der Offenbarung dieser Erfindung zu den einzelnen Erfindungsaspekten stets wechselseitig Bezug genommen werden kann.

Gemäß einem ersten Aspekt der Erfindung wird beschrieben eine Energie-Bereitstellungsvorrichtung, welche aufweist (a) eine Bereitstellungseinrichtung zum Bereitstellen von elektrischer Leistung für ein Stromnetz bzw. für die an dem Stromnetz angeschlossenen elektrischen Verbraucher; (b) eine Steuereinheit zum Steuern des Betriebs der Bereitstellungseinrichtung in einem ersten Betriebsmodus und in einem zweiten Betriebsmodus; (c) eine Schnittstelle, eingerichtet zum Empfangen von externen Steuersignalen und zum Weiterleiten der externen Steuersignale, welche indikativ sind für die Art und Weise, wie die Bereitstellungseinrichtung in dem ersten Betriebsmodus arbeitet; (d) eine Kommunikation-Überwachungseinheit, welche mit der Schnittstelle und der Steuereinheit gekoppelt ist und welche eingerichtet ist (d1) zu überwachen, ob externe Steuersignale von der Schnittstelle empfangen werden und, (d2) falls für eine vorbestimmten Zeitspanne kein externes Steuersignal oder kein gültiges externes Steuersignal von der Schnittstelle empfangen wurde, ein Betriebsmodus-Steuersignal an die Steuereinheit zu übermitteln, welches die Steuereinheit dazu veranlasst, die Bereitstellungseinrichtung in dem zweiten Betriebsmodus zu betreiben.

Der beschriebenen Energie-Bereitstellungsvorrichtung liegt die Erkenntnis zugrunde, dass innerhalb eines Energie-Bereitstellungssystems mit bevorzugt mehreren solchen Energie-Bereitstellungsvorrichtungen die Auswirkungen von einem Ausfall einer Kommunikationsverbindung, über welche normalerweise die externen Steuersignale gesendet werden, dahingehend zumindest teilweise kompensiert wird, dass die Bereitstellungseinrichtung in den zweiten Betriebsmodus übergeht. Der zweite Betriebsmodus kann sich insbesondere dadurch von dem ersten Betriebsmodus unterscheiden, dass ein Ausbleiben der externen Steuersignale nicht zu einer unerwünschten oder sogar gefährlichen Instabilität der gesamten Energie-Bereitstellungsvorrichtung führt. In dem zweiten Betriebsmodus arbeitet die Energie-Bereitstellungsvorrichtung bzw. die Bereitstellungseinrichtung vielmehr autark. Auch wenn ein solcher autarker Betrieb insbesondere in Hinblick auf die Effizienz des Energie-Bereitstellungssystems typischerweise nicht so günstig sein sollte, so ist das Vorsehen des zweiten Betriebsmodus und insbesondere der automatische Übergang in diesen zweiten Betriebsmodus im Vergleich zu dem Aufwand für eine redundante Auslegung von Kommunikationsverbindungen sehr viel effizienter. Bei einer solchen Abwägung ist auch zu berücksichtigen, dass die betreffende Energie-Bereitstellungsvorrichtung im Normalfall und damit für die überwiegende Zeit in dem ersten Betriebsmodus bzw. zumindest nicht in dem zweiten Betriebsmodus arbeitet.

Die beschriebenen Einheiten der Energie-Bereitstellungsvorrichtung, insbesondere die Steuereinheit und die Kommunikation-Überwachungseinheit, stellen funktionale Einheiten dar, welche abhängig von der konkreten Ausführungsform mittels Hardware, Software oder in hybrider Form durch eine Kombination von Hardware und Software realisiert werden können. Diese Einheiten können auch durch eine gemeinsame Einheit mittels Hardware und/oder mittels Software realisiert werden, welcher optional auch noch die Schnittstelle zugeordnet sein kann.

Die externen Steuersignale können von jeder beliebigen Entität an die beschriebene Schnittstelle übermittelt werden. Diese Entität kann ein sog. Leitsystem eines Energie-Bereitstellungssystems sein, welche neben der beschriebenen Energie-Bereitstellungsvorrichtung auch noch zumindest eine andere Energie-Bereitstellungsvorrichtung steuert.

Die unterschiedlichen Betriebsmodi können sich insbesondere durch die Werte für elektrische Parameter bzw. für entsprechende interne Steuerparameter voneinander unterscheiden. Dazu zählen insbesondere Parameter, welche für die Leistung indikativ sind, die von der betreffenden Energie-Bereitstel-lungsvorrichtung in das Stromnetz eingespeist wird. Falls es sich bei der Energie-Bereitstellungsvorrichtung um einen elektrischen Energiespeicher handelt, dann kann ein solcher (weiterer) Parameter insbesondere für die Leistung indikativ sein, welche aktuell oder in der näheren Zukunft in das Stromnetz eingespeist wird bzw. werden soll.

Unter dem Begriff "externes Steuersignal" werden in diesem Dokument nicht nur Signale verstanden, welche zu einer Änderung der Art und Weise des Betriebs der Bereitstellungseinrichtung (im ersten Betriebsmodus) führen. Ein Steuersignal kann auch ein Signal sein, welches dafür sorgt, dass die Steuereinrichtung den Betrieb der Bereitstellungseinrichtung (im ersten Betriebsmodus) beibehält. In diesem Fall enthält das Steuersignal die Information, den Betrieb der jeweiligen Bereitstellungseinrichtung (zumindest für eine bestimmte Zeitspanne) unverändert beizubehalten.

Unter einem "Steuersignal" ist in diesem Dokument ganz allgemein jegliche übertragene bzw. zu übertragenden Information zu verstehen, welche einen Einfluss auf die Art und Weise des Betriebs der Bereitstellungseinrichtung (im ersten Betriebsmodus) oder auf einen Übergang zwischen den beiden Betriebsmodi hat. Die Information kann in analoger oder digitaler Form mittels geeigneter Spannungsverläufe übertragen werden. Die Information kann auch auf der Grundlage eines geeigneten Kommunikationsprotokolls mittels Nachrichten, Datentelegrammen, etc. übermittelt werden.

Die vorbestimmte Zeitspanne kann auf vielfältige Weise gemessen bzw. überwacht werden. Derzeit als geeignet angesehene Mittel sind beispielsweise Timer, fortlaufende Zähler, sog. Watchdogs, etc.

Es wird darauf hingewiesen, dass in diesem Dokument für ein und denselben technischen Vorgang manchmal der Begriff "Energie" und an anderer Stelle der Begriff der "Leistung" oft im Zusammenhang mit dem gleichen technischen Vorgang verwendet wird. Die physikalische Größe "Energie" ist in bekannter Weise die über einen bestimmten Zeitraum integrierte Leistung.

Gemäß einem Ausführungsbeispiel der Erfindung ist die Energie-Bereitstellungsvorrichtung (a) ein Stromgenerator, insbesondere ein Diesel-Generator, (b) ein Heizkraftwerk, insbesondere ein Block-Heizkraftwerk, mit einer Stromerzeugungsturbine, (c) eine Photovoltaikanlage, (d) eine Windenergieanlage oder (e) ein elektrischer Energiespeicher.

Die Erfindung kann mit verschiedenen Arten von Energie-Bereitstellungsvorrichtungen realisiert werden und hat damit ein weit verbreitetes Anwendungspotential. Grundsätzlich können alle Arten von Vorrichtungen (i) zum Erzeugen von elektrischer Energie, (ii) zum Umwandeln thermischer oder mechanischer Energie in elektrische Energie sowie (iii) zum temporären Speichern von elektrischer Energie zum Einsatz kommen. Insbesondere können für einen (ökologisch) ausgewogenen Energiemix an dem beschriebenen Stromnetz mehrere unterschiedliche Arten von Energie-Bereitstellungsvorrichtungen angeschlossen sein, welche die angeschlossenen Verbraucher mit elektrischer Energie versorgen.

Der zweite Betriebsmodus ist ein autarker Betriebsmodus. Dies kann insbesondere bedeuten, dass die Steuereinheit den Betrieb der Energie-Bereitstellungsvorrichtung lediglich auf Grundlage von internen aktuellen Betriebsparametern und/oder von Eingangsgrößen steuert, welche von der Energie-Bereitstellungsvorrichtung selbst bzw. von der Energie-Bereitstellungsvorrichtung zugeordneten Sensoren erfasst werden. Erfindungsgemäß bedeutet "autark", dass die Steuerung der Energie-Bereitstellungsvorrichtung nicht von externen Steuersignalen abhängt.

Ein autarker Betriebsmodus kann auch dann vorliegen, wenn eine Kommunikationsverbindung von und zu externen Entitäten wie beispielsweise ein Leitsystem eines Energie-Bereitstellungssystems intakt ist, (gültige) externe Steuersignale aber aus welchem Grund auch immer nicht empfangen oder nicht genutzt werden. Ein solches "Nicht Nutzen" von Steuersignalen kann beispielsweise dann sinnvoll sein, wenn die Energie-Bereitstellungsvorrichtung lediglich zu Testzwecken in dem zweiten autarken Betriebsmodus betrieben wird.

Gemäß einem weiteren Ausführungsbeispiel der Erfindung weist die Energie-Bereitstellungsvorrichtung ferner eine Stromnetz-Überwachungseinheit auf, welche mit der Steuereinheit gekoppelt ist und welche mit dem Stromnetz an einem Messpunkt koppelbar ist.

Die Stromnetz-Überwachungseinheit kann im einfachsten Fall ein (lokales) Messgerät zum Erfassen der Frequenz und/oder der Spannung des Stromnetzes an dem genannten Messpunkt sein. Die aktuelle Netzfrequenz und/oder die aktuelle Netzspannung können der Steuereinheit nämlich wichtige Informationen über den aktuellen (Auslastungs)Zustand des Stromnetzes geben, welche in dem zweiten (autarken) Betriebsmodus von der Steuereinheit zum Steuern eines in Hinblick auf eine hohe Stromnetz-Stabilität geeignete Steuerung des Betriebs der Energie-Bereitstellungsvorrichtung verwendet werden. In Hinblick auf eine proaktive Stabilisierung des Stromnetzes können auch zeitliche Änderungen der genannten Stromnetzparameter Frequenz und/oder Spannung verwendet werden.

Es wird darauf hingewiesen, dass auch andere physikalische Parameter verwendet werden können, welche charakteristisch für den aktuellen Zustand des Stromnetzes sind. So können beispielsweis Phasenwinkel zwischen Spannung und einem aus dem Stromnetz heraus bzw. in das Stromnetz hinein fließenden Strom erfasst werden, welcher Phasenwinkel indikativ die Stärke einer Blindleistung ist. Manche Energie-Bereitstellungsvorrichtungen, insbesondere solche, welche über einen sog. AC-DC-AC Leistungskonverter an das Stromnetz angeschlossen sind, können durch einen geeigneten Betrieb von Hochleistungs-Halbleiterschaltern des Konverters zu einer Blindleistungskompensation beitragen.

Gemäß einem weiteren Ausführungsbeispiel der Erfindung erfolgt im zweiten Betriebsmodus lediglich eine Primärregelung und/oder eine Tertiärregelung. Eine Sekundärregelung erfolgt bei diesem Ausführungsbeispiel in dem zweiten Betriebsmodus nicht.

Die Primärregelung kann mittels einer in der Steuereinheit integrierten "Droopfunktion" realisiert werden. Die Tertiärregelung kann mittels einer in der Steuereinheit integrierten Ein- bzw. Ausschaltsteuerung realisiert werden.

Unter dem Ausdruck "Primärregelung" kann insbesondere eine Regelung verstanden werden, die bei einer auftretenden Differenz zwischen einem Ist-Wert und einem Soll-Wert eines Stromnetzparameters einen Stelleingriff vornimmt, dessen Stärke unmittelbar von der Differenz abhängt. Bei einem Proportionalregler ist eine entsprechende Regelcharakteristik eine Gerade bzw. eine "Droopfunktion". Eine Primärregelung mit insbesondere einer "Droopfunktion" kann dafür sorgen, dass die Leistungsbeiträge zwischen verschiedenen Energie-Bereitstellungsvorrichtungen entsprechend ihrer jeweiligen Leistungsfähigkeit aufgeteilt wird. Dies kann quasi instantan, das heißt ohne eine zeitliche Verzögerung, geschehen.

Unter dem Ausdruck "Sekundärregelung" kann insbesondere eine Regelung verstanden werden, welche anhand einer zeitweiligen Veränderung von zumindest einem Sollwert eines Stromnetzparameters dafür sorgt, dass Frequenz und Spannung ihren Sollwerten angeglichen wird. Die Sekundärregelung ist typischerweise etwas langsamer als die Primärregelung. Eine Sekundärregelung ergeht typischerweise über mehrere Energie-Bereitstellungsvorrichtungen und kann daher auch als Kollektivregelung bezeichnet werden. Aus diesem Grund scheidet in dem o.g. autarken Betriebsmodus die Durchführung einer Sekundärregelung aus.

Unter dem Ausdruck "Tertiärregelung" kann insbesondere eine in Bezug auf die Primär- und die Sekundärregelung langsamere Regelung verstanden werden, welche durch ein Zuschalten bzw. Abschalten von Energie einspeisenden Energie-Bereitstellungsvorrichtungen oder Energie aufnehmenden Energie-Bereitstellungsvorrichtungen dafür sorgt, dass genügend Energie-Bereitstellungskapazität für einen Ausgleich zwischen eingespeister Leistung und entnommener Leistung zur Verfügung steht. Aus Effizienzgründen können, falls mehr als genügend Energie-Bereitstellungskapazität zur Verfügung steht, einzelne Energie-Bereitstellungsvorrichtungen mittels der Tertiärregelung (vorrübergehend) abgeschalten werden. Dabei können Energie einspeisende Energie-Bereitstellungsvorrichtungen die vorstehend genannten Energie-Bereitstellungsvorrichtungen (a) bis (d) und der elektrische Energiespeicher (e) sein, sofern er gerade entladen wird. Eine Energie aufnehmende Energie-Bereitstellungsvorrichtung kann der elektrische Energiespeicher (e) sein, sofern er gerade (durch überschüssige in dem Netz verfügbare Leistung) geladen wird.

Gemäß einem weiteren Aspekt der Erfindung wird ein Energie-Bereitstellungssystem beschrieben, welches aufweist (a) zumindest zwei Energie-Bereitstellungsvorrichtungen wie vorstehend beschrieben und (b) eine übergeordnete Steuerungsvorrichtung, welche über eine Kommunikationsverbindung mit den Energie-Bereitstellungsvorrichtungen kommunikativ gekoppelt ist, so dass, sofern die Kommunikationsverbindung intakt ist, die externen Steuersignale von der übergeordneten Steuerungsvorrichtung an die jeweilige Steuereinheit der Energie-Bereitstellungsvorrichtungen übertragbar sind.

Dem beschriebenen Energie-Bereitstellungssystem liegt die Erkenntnis zugrunde, dass auch bei einem Ausfall der Kommunikationsverbindung ein Weiterbetrieb der Energie-Bereitstellungsvorrichtungen gewährleistet werden kann, wobei der Weiterbetrieb insbesondere hinsichtlich der Stabilität des Stromnetzes nicht wesentlich ungünstiger ist als ein unter anderem von der übergeordneten Steuerungsvorrichtung gesteuerter Betrieb. Es kann also erforderlich sein, dass gewisse Einschränkungen hinsichtlich eines optimalen Betriebs in Kauf genommen werden müssen. Bei einer geeigneten Einstellung der Steuerungsparameter für den zweiten Betriebsmodus sind diese Einschränkungen typischerweise jedoch nicht so gravierend, als dass sie den Aufbau einer zweiten redundanten Kommunikationsverbindung rechtfertigen würden.

Die beschriebene übergeordnete Steuerungsvorrichtung, welche auch als (überlagertes) Leitsystem bezeichnet werden kann, realisiert bevorzugt eine Tertiär- und eine Sekundärregelung. Eine (für jede Energie-Bereitstellungsvorrichtung individuelle) Primärregelung wird typischerweise nicht vorgenommen.

Mit dem beschriebenen Energie-Bereitstellungssystem kann auf vorteilhafte Weise ein sog. Inselnetz gebildet werden. Ein Inselnetz ist in bekannter Weise ein Stromnetz, an welches lediglich einige wenige Energie-Bereitstellungsvorrichtungen angeschlossen sind, welches ein räumlich enges Gebiet versorgt und welches keinen elektrischen Anschluss zu anderen Stromnetzen besitzt.

Gemäß einem weiteren Aspekt der Erfindung wird ein Verfahren zum Bereitstellen von elektrischer Leistung für ein Stromnetz bzw. für die an dem Stromnetz angeschlossenen elektrischen Verbraucher mittels einer Energie-Bereitstellungsvorrichtung beschrieben. Die Energie-Bereitstellungsvorrichtung kann insbesondere eine Energie-Bereitstellungsvorrichtung des vorstehend beschriebenen Typs sein. Das Verfahren weist auf (a) ein Überwachen, ob externe Steuersignale von einer Schnittstelle der Energie-Bereitstellungsvorrichtung empfangen werden; und falls für eine vorbestimmte Zeitspanne kein externes Steuersignal oder kein gültiges externes Steuersignal von der Schnittstelle empfangen und an eine Steuereinheit der Energie-Bereitstellungsvorrichtung weitergeleitet wurde, (b) ein Überführen der Energie-Bereitstellungsvorrichtung von einem ersten Betriebsmodus in einen zweiten Betriebsmodus.

Auch dem beschriebenen Verfahren liegt die Erkenntnis zugrunde, dass bei einem Ausfall einer Kommunikationsverbindung, über welche im Normalbetrieb die externen Steuersignale von einer übergeordneten Steuerungsvorrichtung des Energie-Bereitstellungssystems empfangen werden, ein Weiterbetrieb der von dem Ausfall der Kommunikationsverbindung betroffenen Energie-Bereitstellungsvorrichtung möglich ist, wobei die Stabilität des Stromnetzes nicht oder nicht signifikant gefährdet wird. Dafür sorgt der beschriebene zweite Betriebsmodus, welcher mittels geeigneter Betriebsparameter(werte) einen autarken Betrieb der Energie-Bereitstellungsvorrichtung ermöglicht. Die Betriebsparameter(werte) werden bevorzugt von einer (internen) Steuereinheit der Energie-Bereitstellungsvorrichtung vorgegeben, wobei diese auch von lokal gewonnenen Messwerten, insbesondere von Messwerten indikativ für den aktuellen Zustand des Stromnetzes, abhängen können.

Gemäß einem weiteren Ausführungsbeispiel der Erfindung steuert eine Steuereinheit der Energie-Bereitstellungsvorrichtung eine Bereitstellungseinrichtung der Energie-Bereitstellungsvorrichtung im zweiten Betriebsmodus derart, dass die Bereitstellungseinrichtung dem Stromnetz eine elektrische Leistung bereitstellt, welche in Bezug zu einer anderen elektrischen Leistung, die von einer anderen Bereitstellungseinrichtung einer anderen Energie-Bereitstellungsvorrichtung dem Stromnetz bereitgestellt wird, ein vorbestimmtes Verhältnis aufweist.

Anschaulich ausgedrückt sorgt die (lokale) Steuereinheit ggf. zusammen mit zumindest einer anderen (lokalen) Steuereinheit der anderen Energie-Bereitstellungsvorrichtung dafür, dass (auch) im zweiten Betriebsmodus ein vorbestimmtes Verhältnis zwischen den elektrischen Leistungsbeiträgen der einzelnen Energie-Bereitstellungsvorrichtungen gegeben ist. Dieses Verhältnis kann sich insbesondere ergeben aus der Leistungsfähigkeit, insbesondere der Maximalleistung der jeweiligen Energie-Bereitstellungsvorrichtung. Gleichartige Energie-Bereitstellungsvorrichtungen mit einer gleichen elektrischen Leistungsfähigkeit stellen dabei bevorzugt jeweils die gleiche elektrische Leistung bereit.

Es wird darauf hingewiesen, dass, falls es sich bei den Energie-Bereitstellungsvorrichtungen um elektrische Energiespeicher handelt, die entsprechende(n) lokale(n) Steuereinheiten dafür sorgen können, dass ein vorgegebenes Verhältnis in Bezug auf die jeweils von dem Stromnetz aufgenommene elektrische Leistung hergestellt wird.

Gemäß einem weiteren Ausführungsbeispiel der Erfindung weist das Verfahren ferner auf, falls nach einer gewissen Zeit wieder gültige externe Steuersignale empfangen werden, ein Überführen der Energie-Bereitstellungsvorrichtung von dem zweiten Betriebsmodus in den ersten Betriebsmodus. Dadurch kann nach einer Wiederherstellung der Kommunikationsverbindung auf vorteilhafte Weise automatisch wieder in den ersten Betriebsmodus übergegangen werden, welcher typischerweise für die Stabilität des Stromnetzes und insbesondere auch für die energetische Effizienz der Stromerzeugung zumindest etwas besser ist.

Gemäß einem weiteren Ausführungsbeispiel der Erfindung erfolgt das Überführen von dem zweiten Betriebsmodus in den ersten Betriebsmodus erst nach einer vorgegebenen Verzögerungszeitspanne nach dem erneuten Empfang von gültigen externen Steuersignalen. Dadurch kann insbesondere verhindert werden, dass bei einem Wieder-Funktionieren der Kommunikationsverbindung mehrere Energie-Bereitstellungsvorrichtungen gleichzeitig ans Netz gehen und dadurch die Stabilität des Netzes beeinträchtigen. Dazu kann man innerhalb eines Energie-Bereitstellungssystems mit mehreren Energie-Bereitstellungsvorrichtungen unterschiedlichen Energie-Bereitstellungsvorrichtungen unterschiedliche Verzögerungszeitspannen zuordnen.

Gemäß einem weiteren Ausführungsbeispiel der Erfindung weist das Verfahren ferner auf, vor dem Überführen der Energie-Bereitstellungsvorrichtung von dem zweiten Betriebsmodus in den ersten Betriebsmodus, ein Parametrieren der Energie-Bereitstellungsvorrichtung mit Parameterwerten, welche bei einem Übergang von dem zweiten Betriebsmodus in den ersten Betriebsmodus indikativ sind für die Art und Weise des Betriebs in dem ersten Betriebsmodus.

Dadurch kann durch einen geeignete Wahl der Parameterwerte bei einem Umschalten von dem zweiten Betriebsmodus in den ersten Betriebsmodus, welches Umschalten naturgemäß ein diskreter Prozess ist, verhindert werden, dass dieses Umschalten zu einer Instabilität des Stromnetzes führt. Dabei ist es in der Regel ausreichend, wenn die Parametrisierung lediglich für einen vergleichsweise kurzen Zeitraum beginnend mit dem Zeitpunkt des Umschaltens gültig ist. Danach kann die vorstehend beschriebene übergeordnete Steuereinheit die globale Steuerung der betreffenden Energie-Bereitstellungsvorrichtung übernehmen und dafür neue Parameterwerte an die (lokale) Steuereinheit übermitteln.

Durch eine geeignete Parametrierung kann insbesondere die Frequenz und die Höhe der Spannung der zu Beginn des ersten Betriebsmodus von der Energie-Bereitstellungsvorrichtung bereitgestellten Spannung eingestellt werden. Auf alle Fälle kann durch die beschriebene Parametrisierung ein sanfter Übergang zwischen den beiden Betriebsmodi gewährleistet werden, so dass Instabilitäten des Stromnetzes nicht zu besorgen sind.

Auch in Bezug auf geeignete Parameterwerte kann der aktuelle Zustand des Stromnetzes berücksichtigt werden. Wie bereits vorstehend erwähnt kann dafür insbesondere die aktuelle Frequenz und/oder die aktuelle Spannung an einem Messpunkt des Stromnetzes herangezogen werden.

Das Verfahren und die Energie-Bereitstellungsvorrichtung weisen ferner auf, falls für eine weitere vorbestimmte Zeitspanne gültige externe Steuersignale empfangen werden (a) ein Empfangen eines Diagnose-Startsignals durch die Steuereinheit; (b) ein Überführen der Energie-Bereitstel-lungsvorrichtung von dem ersten Betriebsmodus in den zweiten Betriebsmodus; (c) ein Sammeln von Diagnoseinformationen, welche für Betriebsparameterwerte der Energie-Bereitstellungsvorrichtung in zweiten Betriebsmodus indikativ sind; und (d) ein Senden der Diagnoseinformationen an eine übergeordnete Steuerungsvorrichtung. Die übergeordnete Steuerungsvorrichtung kann insbesondere die vorstehend im Zusammenhang mit dem Energie-Bereitstellungssystem genannte übergeordnete Steuereinheit sein, welche nicht nur den Betrieb der genannten Energie-Bereitstellungsvorrichtung sondern auch den Betrieb von zumindest einer weiteren Energie-Bereitstellungsvorrichtung zumindest mitbestimmt.

Anschaulich ausgedrückt wird bei dem hier beschriebenen Verfahren trotz einer funktionierenden Kommunikationsverbindung die Energie-Bereitstellungsvorrichtung (vordergründig unnötigerweise) in den zweiten Betriebsmodus überführt. Während die Energie-Bereitstellungsvorrichtung in diesem zweiten Betriebsmodus arbeitet werden jedoch mittels geeigneter Messeinrichtungen und/oder durch eine Analyse von Betriebssoftware Diagnoseinformationen gesammelt, welche die Art und Weise des Betriebs der Energie-Bereitstellungsvorrichtung in dem zweiten Betriebsmodus charakterisieren. Diese Diagnoseinformationen können dann von der übergeordneten Steuerungsvorrichtung oder jeder anderen Auswerteeinheit analysiert werden, so dass man über das Verhalten der Energie-Bereitstellungsvorrichtung in dem zweiten Betriebsmodus wichtige Erkenntnis gewinnen kann, die beispielsweise für eine möglichst geeignete Parametrisierung verwendet werden können. Auch dadurch können (diskrete) Übergänge zwischen den verschiedenen Betriebsmodi sanfter realisiert werden, so dass ein weiterer Beitrag für eine Stabilisierung des Stromnetzes geleistet wird.

Gemäß einem vorliegend nicht beanspruchten Aspekt wird beschrieben ein Computerprogramm zum Bereitstellen von elektrischer Leistung für ein Stromnetz bzw. für die an dem Stromnetz angeschlossenen elektrischen Verbraucher mittels einer Energie-Bereitstellungsvorrichtung, insbesondere einer Energie-Bereitstellungsvorrichtung des vorstehend beschriebenen Typs. Das Computerprogramm ist, wenn es von einem Prozessor ausgeführt wird, zum Durchführen des vorstehend beschriebenen Verfahrens eingerichtet.

Das Computerprogramm kann als computerlesbarer Anweisungscode in jeder geeigneten Programmiersprache wie beispielsweise in JAVA, C++ etc. implementiert sein. Das Computerprogramm kann auf einem computerlesbaren Speichermedium (CD-Rom, DVD, Blueray Disk, Wechsellaufwerk, flüchtiger oder nicht-flüchtiger Speicher, eingebauter Speicher/Prozessor etc.) abgespeichert sein. Der Anweisungscode kann einen Computer oder andere programmierbare Geräte wie insbesondere eine Steuereinheit für eine Energie-Bereitstellungsvorrichtung derart programmieren, dass die gewünschten Funktionen ausgeführt werden. Ferner kann das Computerprogramm in einem Netzwerk wie beispielsweise dem Internet bereitgestellt werden, von dem es bei Bedarf von einem Nutzer heruntergeladen werden kann.

Die Erfindung kann sowohl mittels eines Computerprogramms, d.h. einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert werden.

Die in diesem Dokument beschriebene Erfindung kann auch unter Verwendung eines "CLOUD" Netzes mit entsprechenden virtuellen Speicherplätzen und entsprechender virtuelle Rechenkapazität durchgeführt werden.

Weitere Vorteile und Merkmale der vorliegenden Erfindung ergeben sich aus der folgenden beispielhaften Beschreibung derzeit bevorzugter Ausführungsformen.

Figur 1 zeigt ein Stromnetz mit mehreren daran angeschlossenen elektrischen Verbrauchern und einem Energie-Bereitstellungssystem mit einem "Mix" an unterschiedlichen Energie-Bereitstellungsvorrichtungen.

Figur 2 zeigt eine Energie-Bereitstellungsvorrichtung gemäß einem Ausführungsbeispiel der Erfindung.

In der Zeichnung sind gleiche Komponenten sind mit dem gleichen Bezugszeichen versehen.

Es wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren.

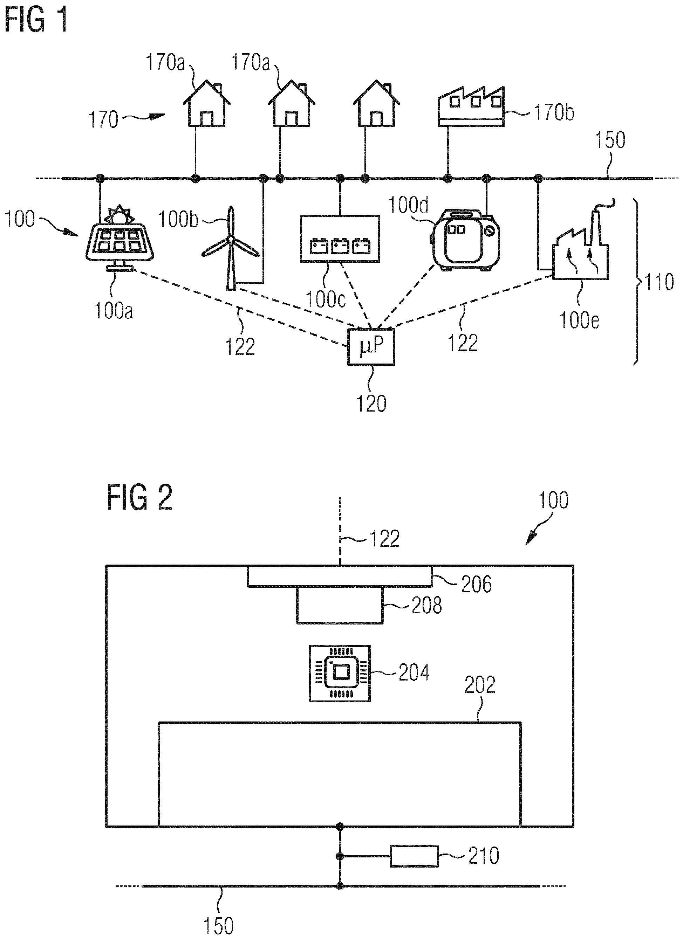

Figur 1 zeigt ein Stromnetz 150 an dem mehrere elektrische Verbraucher 170 angeschlossen sind. Gemäß dem hier dargestellten Ausführungsbeispiel umfassen die elektrischen Verbraucher 170 mehrere Haushalte 170a sowie eine Fabrik 170b, welche einen im Vergleich zu den Haushalten 170a besonders hohen Bedarf an elektrischer Energie hat. Die von den elektrischen Verbrauchern 170 benötigte elektrische Energie wird von einem Energie-Bereitstellungssystem 110 aufgebracht, welches eine Mehrzahl von unterschiedlichen Arten von elektrischen Energie-Bereitstellungsvorrichtungen 100 aufweist. Bei dem Energie-Bereitstellungssystem 110 handelt es sich im Wesentlichen um ein sog. "dezentrales System". Dies ist am einfachsten daraus ersichtlich, dass jede der Energie-Bereitstellungsvorrichtungen 100 an einem anderen Anschlusspunkt an dem elektrischen Stromnetz 150 angeschlossen ist. Selbstverständlich ist es auch möglich, einzelne Energie-Bereitstellungsvorrichtung 100 elektrisch zusammenzufassen und an einen gemeinsamen Anschlusspunkt mit dem elektrischen Stromnetz 150 zu verbinden. Auch ein beliebiger anderer "Mix" von Energie-Bereitstellungsvorrichtungen 100 ist möglich.

Gemäß dem hier dargestellten Ausführungsbeispiel umfasst das elektrische Energie-Bereitstellungssystem 110 zwei Arten von sog. "regenerativen" Energiequellen, nämlich eine Photovoltaikanlage 100a und eine Windenergieanlage 100b. Außerdem umfasst das Energie-Bereitstellungssystem 110 zwei herkömmliche Energieerzeuger, nämlich einen (mit Dieselkraftstoff betriebenen) Stromgenerator 100d sowie ein Heizkraftwerk 100e, welches insbesondere ein so genanntes Blockheizkraftwerk sein kann. Ferner umfasst das Energie-Bereitstellungssystem 110 noch einen elektrischen Energiespeicher 100c, welcher in Zeiten eines "Strom-Überangebots" elektrische Energie aus dem Stromnetz 150 aufnimmt, diese speichert und in Zeiten einer "Strom-Knappheit" zumindest einen Teil der gespeicherten elektrischen Energie wieder an das elektrische Stromnetz 150 abgibt. Auf diese Weise können zeitliche Schwankungen in dem Verhältnis zwischen (i) der von den elektrischen Verbrauchern 170 benötigten elektrischen Leistung und (ii) der von den Energie-Bereitstellungsvorrichtungen 100a, 100b, 100d und 100e bereitgestellten bzw. erzeugten elektrischen Leistung ausgeglichen werden.

Um den Betrieb des elektrischen Energie-Bereitstellungssystems 110 zu koordinieren und damit eine hohe Energieeffizienz zu gewährleisten, ist eine häufig als Leitsystem bezeichnete übergeordnete Steuervorrichtung 120 vorgesehen, welche über eine Mehrzahl von Kommunikationsverbindungen 122 den einzelnen Energie-Bereitstellungsvorrichtungen 100 bzw. deren lokalen Steuereinheiten geeignete koordinierende Steuersignale übermittelt. In dem hier dargestellten Ausführungsbeispiel ist jede der Energie-Bereitstellungsvorrichtungen 100 über eine eigene Kommunikationsverbindung 122 mit der übergeordneten Steuervorrichtung 120 verbunden. Anstelle einer solchen sternförmigen Verbindung können auch andere Topologien von Kommunikationsnetzen verwendet werden.

Es ist offensichtlich, dass bei einem Ausfall von zumindest einer Kommunikationsverbindung 122 die von dem Ausfall betroffene Energie-Bereitstellungsvorrichtung 100 nicht mehr in koordinierter Weise (in Bezug zu anderen Energie-Bereitstellungsvorrichtungen 100) betrieben werden kann. Dadurch wird insbesondere die Effizienz der elektrischen Energieversorgung reduziert.

Um die negativen Auswirkungen eines Ausfalls einer Kommunikationsverbindung 122 zu minimieren, weisen zumindest einige der Energie-Bereitstellungsvorrichtungen 100 eine (lokale) Steuereinheit auf, welche in der Lage ist, einen Ausfall der jeweiligen Kommunikationsverbindung 123 zu erkennen und dann dafür zu sorgen, dass die betreffende Energie-Bereitstellungsvorrichtung 100 von einem ersten Betriebsmodus (Normalbetrieb) in einen zweiten Betriebsmodus (Notfallbetrieb) übergeht.

Figur 2 zeigt in einer schematischen Darstellung den Aufbau einer solchen Energie-Bereitstellungsvorrichtung 100 gemäß einem Ausführungsbeispiel der Erfindung. Die Vorrichtung 100 weist auf (a) eine Bereitstellungseinrichtung 202 zum Bereitstellen von elektrischer Leistung für das Stromnetz 150. Falls es sich bei der Energie-Bereitstellungsvorrichtung 100 um einen elektrischen Energiespeicher handelt, dann ist die Bereitstellungseinrichtung 202 nicht nur konfiguriert, um elektrische Energie bereitzustellen sondern auch um elektrische Energie von dem Stromnetz 150 aufzunehmen und zu speichern.

Der Betrieb der Bereitstellungseinrichtung 202 wird von einer (lokalen) Steuereinheit 204 gesteuert, wobei zumindest ein erster Betriebsmodus und ein zweiter Betriebsmodus möglich ist. Über eine Schnittstelle 206 empfängt im ersten Betriebsmodus die Steuereinheit 204 koordinierende Steuersignale von der in Figur 1 dargestellten übergeordneten Steuervorrichtung 120. Die entsprechende Kommunikationsverbindung ist auch in Figur 2 mit dem Bezugszeichen 122 gekennzeichnet. Die koordinierenden Steuersignale geben der Steuereinheit 204 Vorgaben, die auch den aktuellen und/oder zukünftigen Betrieb von anderen Energie-Bereitstellungsvorrichtungen 100 berücksichtigen, welche ebenfalls an dem Stromnetz 150 angeschlossen sind.

Die Energie-Bereitstellungsvorrichtung 100 weist ferner eine Kommunikation-Überwachungseinheit 208 auf, welche mit der Schnittstelle 206 und der (lokalen) Steuereinheit 204 gekoppelt ist und welche eingerichtet ist (i) zu überwachen, ob externe koordinierende Steuersignale von der Schnittstelle 206 empfangen werden. Falls dies für eine vorbestimmten Zeitspanne nicht der Fall sein sollte und für eine vorbestimmten Zeitspanne kein externes bzw. koordinierendes Steuersignal oder kein gültiges externes bzw. koordinierendes Steuersignal von der Schnittstelle 206 empfangen wurde, dann übermittelt die Kommunikation-Überwachungseinheit 208 ein Betriebsmodus-Steuersignal an die Steuereinheit 204. Als Antwort auf den Empfang eines solchen Betriebsmodus-Steuersignales steuert die Steuereinheit 204 die Bereitstellungseinrichtung 202 dahingehend, dass diese von dem normalen ersten Betriebsmodus in den zweiten Betriebsmodus übergeht.

Da in diesem zweiten Betriebsmodus aufgrund einer nicht funktionierenden Kommunikationsverbindung 122 keine koordinierenden externe Steuersignale empfangen werden können, ist die Energie-Bereitstellungsvorrichtung 100 darauf angewiesen, autark die Art und Weise zu bestimmen, wie sie arbeitet. Dies betrifft insbesondere die Stärke der aktuellen Produktion bzw. Abgabe von elektrischer Leistung oder, falls es sich bei der Energie-Bereitstellungsvorrichtung 100 um einen elektrischen Energiespeicher handelt, ggf. auch die Stärke der aktuellen elektrischen Leistung, welche von dem Stromnetz 150 aufgenommen wird. Zusätzlich entscheidet die Steuereinheit 204 der Energie-Bereitstellungsvorrichtung 100 im zweiten Betriebsmodus auch darüber, ob sie sich ein- oder ausschaltet. Beim Ausschalten prüft sie noch, ob noch andere Energie-Bereitstellungsvorrichtungen aktiv sind.

Um in diesem zweiten Betriebsmodus geeignete Betriebsparameter zu finden, ist gemäß dem hier dargestellten Ausführungsbeispiel der Energie-Bereitstellungsvorrichtung 100 eine Stromnetz-Überwachungseinheit 210 zugeordnet. Diese misst lokal an einem Messpunkt des Stromnetzes 150, welcher Messpunkt zumindest in Bezug auf die Topologie des Stromnetzes 150 nahe bei der Energie-Bereitstellungsvorrichtung 100 liegt, elektrische Parameter des Stromnetzes 150. Zu diesen Parametern zählen insbesondere die aktuelle Spannung und/oder die aktuelle Frequenz der an dem Stromnetz 150 anliegenden elektrischen Versorgungsspannung. Zusätzlich werden auch die von der Energie-Bereitstellungsvorrichtung 100 bereitgestellten Leistungen (Blindleistung und Wirkleistung) gemessen. Die entsprechenden Messwerte werden dann an die Steuereinheit 204 übergeben, welche den Betrieb der Energie-Bereitstellungsvorrichtung 100 bzw. der Bereitstellungseinrichtung 202 abhängig von diesen Messwerten steuert. Aufgrund der Zuordnung der Stromnetz-Überwachungseinheit 210 zu der Energie-Bereitstellungsvorrichtung 100 können diese Messwerte als interne Messwerte bezeichnet werden, so dass der zweite Betriebsmodus der Energie-Bereitstellungsvorrichtung 100 in der Tat ein autarker Betriebsmodus ist. Die Vorrichtung gemäß Figur 2 ist außerdem folgendermaßen eingerichtet: Falls für eine weitere vorbestimmte Zeitspanne gültige externe Steuersignale empfangen werden, werden die Schritte durchgeführt: (a) ein Empfangen eines Diagnose-Startsignals durch die Steuereinheit; (b) ein Überführen der Energie-Bereitstellungsvorrichtung von dem ersten Betriebsmodus in den zweiten Betriebsmodus; (c) ein Sammeln von Diagnoseinformationen, welche für Betriebsparameterwerte der Energie-Bereitstellungsvorrichtung im zweiten Betriebsmodus indikativ sind; und (d) ein Senden der Diagnoseinformationen an die übergeordnete Steuerungsvorrichtung.

Im Folgenden wird anhand von mehreren Ausführungsbeispielen der Betrieb der Energie-Bereitstellungsvorrichtung 100 im zweiten Betriebsmodus näher erläutert. Dabei wird auch spezifisch auf verschiedenen Arten von Energie-Bereitstellungsvorrichtungen 100 eingegangen.

Gemäß dem hier dargestellten Ausführungsbeispiel gilt unabhängig von der Art von Energie-Bereitstellungsvorrichtung 100, dass in dem zweiten Betriebsmodus, welcher aufgrund eines Ausfalls der entsprechenden Kommunikationsverbindung auch als Notfall-Betriebsmodus bezeichnet werden kann, lediglich eine Primärregelung und eine Tertiärregelung vorgenommen wird. Eine Sekundärregelung, welche insbesondere die Frequenz und die Spannung der bereitgestellten elektrischen Leistung bei wechselnder Last auf ihrem Sollwert hält, ist hier explizit nicht vorgesehen. Die Primärregelung erfolgt bei dem hier beschriebenen Ausführungsbeispielen über eine in der jeweiligen lokalen Steuereinheit 204 implementierte Droopfunktion. Die Tertiärregelung erfolgt über eine ebenfalls in der jeweiligen lokalen Steuereinheit 204 implementierte (digitale) Ein-/Ausschaltsteuerung.

I. Primärregelungen

I.1 Primärregelung bei Stromgeneratoren

Unter dem Begriff "Stromgeneratoren" können in diesem Kapitel alle Arten Generatoren verstanden werden, welche mechanische Energie in elektrische Energie umwandeln, wobei die mechanische Energie aus einer Umwandlung aus thermischer und/oder chemischer Energie erfolgen kann. Bei den in dieser Anmeldung beschriebenen Stromnetzen können die Stromgeneratoren beispielsweise Diesel-Generatoren oder die Generatoren eines (Block)Heizkraftwerkes sein.

Alle an dem Stromnetz 150 angeschlossenen und von einem Ausfall der Kommunikationsverbindung betroffenen Stromgeneratoren erzeugen gemeinsam ein Netz mit einer definierten Frequenz und einer definierten Spannungsamplitude. Die Sollwerte für Frequenz ($f_{soll}$) und Amplitude ($V_{soll}$) der von dem Stromgenerator bereitgestellten elektrischen Leistung werden gemäß dem hier dargestellten Ausführungsbeispiel nach folgenden Gleichungen bestimmt:

$$f_{soll} = k_f \ (P_{soll} - P_{ist}) + f_0 \qquad\qquad (1)$$

$$V_{soll} = k_V \ (Q_{soll} - Q_{ist}) + V_0 \qquad\qquad (2)$$

Dabei sind $f_0$ und $V_0$ die Sollwerte für die Frequenz bzw. die Spannung des Stromnetzes 150. $k_f$ und $k_V$ sind die entsprechenden Droop-Faktoren bzw. Proportionalitätskonstanten. Sie sind in bekannter Weise dafür indikativ, wie stark die Primärregelung auf Änderungen der Istwerte von der von dem Stromgenerator erzeugten elektrischen Wirk-leistung $P_{ist}$ bzw. Blindleistung $Q_{ist}$ reagiert. $P_{soll}$ ist die Soll-Wirkleistung, $Q_{soll}$ die Soll-Blindleistung.

In dem zweiten Betriebsmodus werden die Parameter $k_f$, $P_{soll}$, $f_0$ und $k_V$, $Q_{soll}$ und $V_0$ auf Default-Werte gesetzt. Diese Default-Werte werden so aufeinander abgestimmt, dass eine gleichmäßige Lastaufteilung zwischen den verschiedenen an dem Stromnetz 150 angeschlossenen Stromgeneratoren erfolgt.

Es wird darauf hingewiesen, dass die (mathematischen) Vorzeichen der Wirk- und Blindleistungen sich auf das sog. Erzeugerzählpfeilsystem beziehen. Demnach entspricht eine positive Wirkleistung einem Einspeisen von Leistung in das Stromnetz.

I.2 Primärregelung bei elektrischen Energiespeichern

Die elektrischen Energiespeicher erzeugen ebenfalls ein Netz mit einer definierten Frequenz und einer definierten Spannungsamplitude. Im zweiten Betriebsmodus wird ein elektrischer Energiespeicher ebenfalls mit den vorstehend angegebenen Droop-Kurven (1) und (2) betrieben. Da ein Speicher aber nicht unendlich entladen bzw. geladen werden kann, verfügt er zumindest im zweiten Betriebsmodus über eine zusätzliche autarke Entlade- bzw. Ladesteuerung. Nähert sich beim Aufladen der Speicher einem definierten oberen Ladungszustand (State of Charge, SOC) an, so hebt die lokale Steuereinheit den Wert $f_{soll}$ und/oder $P_{soll}$ an und reduziert damit den Leistungszufluss. Nähert sich beim Entladen der Speicher einem definierten unteren SOC, so wird der Wert für $f_{soll}$ und/oder $P_{soll}$ abgesenkt und damit der Leistungsabfluss reduziert. Dabei können die nicht konstant gehaltenen Werte für $f_{soll}$ und/oder $P_{soll}$ so eingestellt werden, dass der Speicher in einem Bereich von 40% < SOC < 70% pendelt. Dieser Vorgang erfolgt sehr langsam mit einer Zeitkonstante im Bereich von einigen Minuten. Damit reagiert der Speicher auf Lastsprünge dynamisch und beteiligt sich an der dynamischen Stabilisierung des Stromnetzes 150 ohne zu stark entladen bzw. beladen zu werden. Dies trägt auch zu einer Verlängerung der Lebensdauer des elektrischen Energiespeichers (Batterie, Akkumulator) bei.

I.3 Primärregelungen bei Photovoltaik- und Windenergieanlagen

Die Photovoltaik- und Windenergieanlagen stellen Leistungsquellen dar und setzen ein vorhandenes Netz voraus. Die folgenden Gleichungen (3) und (4) geben die Wirkleistung $P_{soll}$ und die Blindleistung $Q_{soll}$ an, welche von der entsprechenden Anlage in das Stromnetz eingespeist werden soll.

$$P_{soll} = (f_{soll} - f_{ist}) \ / \ k_f + P_0 \qquad\qquad (3)$$

$$Q_{soll} = (V_{soll} - V_{ist}) \ / \ k_V + Q_0 \qquad\qquad (4)$$

Dabei sind $f_{soll}$ und $V_{soll}$ die Sollwerte für die Frequenz bzw. die Spannung der von der Photovoltaik- bzw. Windenergieanlage gelieferten elektrischen Leistung. Die Parameter $f_{ist}$ bzw. $V_{ist}$ sind die dazugehörigen Ist-Werte. $k_f$ und $k_V$ sind die entsprechenden Droop-Faktoren. $P_0$ und $Q_0$ sind die Sollwerte für den Zufluss von Wirkleistung bzw. Blindleistung in das Stromnetz.

In dem zweiten Betriebsmodus sind auch die Werte für die Parameter der o.g. Gleichungen (3) und (4) auf geeignete Default-Werte gesetzt. Bei passender Abstimmung aller Droop-Faktoren arbeitet das hybride Energie-Bereitstellungssystem stabil und die Energieerzeugungskomponenten teilen sich die Gesamtlast der an das Stromnetz angeschlossenen elektrischen Verbraucher untereinander auf. Je nach Last schwanken dabei die Frequenz und die Amplitude der Spannung des Stromnetzes. Insbesondere die Abweichung der Frequenz von der Nennfrequenz des Netzes kann als Kriterium dafür dienen, ob eine hohe oder eine niedrige Last vorliegt.

II. Tertiärregelungen

II.1 Tertiärregelung bei Stromgeneratoren

Eine niedrige Frequenz des Stromnetzes deutet auf eine hohe (Gesamt)Last durch die elektrischen Verbraucher hin. Deshalb wird bei dem hier beschriebenen Ausführungsbeispiel eine Unterschreitung einer unteren Frequenzschwelle von den inaktiven Stromgeneratoren als Einschaltsignal interpretiert. Damit nicht alle Stromgeneratoren gleichzeitig einschalten, verfügt bei dem hier beschriebenen Ausführungsbeispiel jeder Generator über eine individuelle Verzögerung für sein Einschaltsignal. Falls keine Spannung am Stromnetz anliegt (z.B. weil alle Generatoren abgeschalten wurden, sog. "Schwarzfall"), dann wird aus Sicherheitsgründen (im zweiten Betriebsmodus) ein erneutes Anschalten von Generatoren verhindert. Sinkt die Leistung eines aktiven Generators unter eine vorgegebene untere Schwelle, dann schaltet sich der betreffende Generator selbständig ab. Dadurch wird (im zweiten Betriebsmodus) verhindert, dass eine Mehrzahl von Generatoren mit einer aus Effizienzgründen zu geringen Leistung arbeitet. Ein aus Stabilitätsgründen ggf. sehr ungünstiges gleichzeitiges Abschalten einer Vielzahl oder sogar aller am Stromnetz angeschlossenen Generatoren wird gemäß dem hier dargestellten Ausführungsbeispiel dadurch verhindert, dass jeder Generator über eine individuelle Verzögerung seines Abschaltsignales verfügt. Alternativ kann auch das Absinken der Frequenz des Stromnetzes unter einen vorgegebenen unteren Schwellenwert als ggf. für jeden Generator individuell verzögertes Abschaltsignal verwendet werden.

Um (aus Stabilitätsgründen) ein sanftes Abschalten zu realisieren, kann sich vor dem eigentlichen Abschalten der betreffende Generator entlasten, indem er die Frequenz und die Amplitude der von ihm bereitgestellten elektrischen Spannung so lange absenkt, bis die Wirk- und die Blindleistung einen vorgegebenen Schwellenwert unterschreiten. Ist dies möglich, dann übernehmen offensichtlich andere Energie-Bereitstellungsvorrichtungen die Leistung des Generators. Ist das nicht möglich, dann ist der betreffende Generator die letzte verbliebene Energie-Bereitstellungsvorrichtung und schaltet deshalb nicht ab, weil ansonsten ein vollständiger Ausfall des Stromnetzes ("Blackout") zu besorgen wäre.

II.2 Tertiärregelung bei elektrischen Energiespeichern

Bei dem hier beschriebenen Ausführungsbeispiel sind im zweiten Betriebsmodus, sofern beispielsweise aus Gründen der Betriebssicherheit möglich, die elektrischen Energiespeicher grundsätzlich immer eingeschaltet. Sie schalten sich nicht selbständig aus. In diesem Sinne gibt es für elektrische Energiespeicher eine eingeschränkte Tertiärregelung, welche ein Abschalten der elektrischen Energiespeicher verhindert. Ein selbstständiges Einschalten von inaktiven elektrischen Energiespeichern im zweiten Betriebsmodus kann möglich sein.

II.3 Tertiärregelung bei Photovoltaik- und Windenergieanlagen

Im zweiten Betriebsmodus sind die Photovoltaik- und Windenergieanlagen immer dann eingeschaltet, wenn auch der bzw. die elektrischen Energiespeicher eingeschaltet ist bzw. sind. Sind alle Energiespeicher nicht eingeschaltet oder kann der Zustand der Energiespeicher nicht zuverlässig festgestellt werden, dann schalten sich die Photovoltaik- und Windenergieanlagen ab. Alternativ könnten sie in diesem Fall auch mit einer stark reduzierten Einspeiseleistung (z.B. ihrer minimalen Leistung einer 24 h Leistungskurve) betrieben werden.

Bezugszeichenliste

| | |
|---|---|
| 100 | Energie-Bereitstellungsvorrichtung |
| 100a | Photovoltaikanlage |
| 100b | Windenergieanlage |
| 100c | elektrischer Energiespeicher |
| 100d | Stromgenerator |
| 100e | Heizkraftwerk |
| 110 | Energie-Bereitstellungssystem |
| 120 | übergeordnete Steuervorrichtung / Leitsystem |
| 122 | Kommunikationsverbindung |
| 150 | Stromnetz |
| 170 | elektrischer Verbraucher |
| 170a | Haushalt |
| 170b | Fabrik |

| | |
|---|---|
| 202 | Bereitstellungseinrichtung |
| 204 | Steuereinheit |
| 206 | Schnittstelle |
| 208 | Kommunikation-Überwachungseinheit |
| 210 | Stromnetz-Überwachungseinheit |

**Patentansprüche**

1. Energie-Bereitstellungsvorrichtung (100) aufweisend

eine Bereitstellungseinrichtung (202) zum Bereitstellen von elektrischer Leistung für an einem Stromnetz (150) angeschlossene elektrische Verbraucher (170);

eine Steuereinheit (204), eingerichtet zum Steuern des Betriebs der Bereitstellungseinrichtung (202) in einem ersten Betriebsmodus und in einem zweiten Betriebsmodus, wobei der zweite Betriebsmodus ein autarker Betriebsmodus ist, in welchem die Steuereinheit die Energie-Bereitstellungsvorrichtung unabhängig von externen Steuersignalen steuert;

eine Schnittstelle (206), eingerichtet zum Empfangen und zum Weiterleiten der externen Steuersignale an die Steuereinheit, wobei die Steuersignale indikativ sind für die Art und Weise, wie die Bereitstellungseinrichtung (202) in dem ersten Betriebsmodus arbeitet; und

eine Kommunikation-Überwachungseinheit (208), welche mit der Schnittstelle (206) und der Steuereinheit (204) gekoppelt ist und welche eingerichtet ist

(i) zu überwachen, ob die externen Steuersignale von der Schnittstelle (206) empfangen werden und,

(ii) falls für eine vorbestimmten Zeitspanne kein externes Steuersignal oder kein gültiges externes Steuersignal von der Schnittstelle (206) empfangen wurde, ein Betriebsmodus-Steuersignal an die Steuereinheit (204) zu übermitteln, welches die Steuereinheit (204) dazu veranlasst, die Bereitstellungseinrichtung (202) in dem zweiten Betriebsmodus zu betreiben;

**dadurch gekennzeichnet, dass** die Energie-Bereitstellungsvorrichtung dazu eingerichtet ist, falls für eine weitere vorbestimmte Zeitspanne gültige externe Steuersignale empfangen werden:

ein Diagnose-Startsignal durch die Steuereinheit zu empfangen;

die Bereitstellungseinrichtung (202) von dem ersten Betriebsmodus in den zweiten Betriebsmodus zu überführen;

Diagnoseinformationen zu sammeln, welche für Betriebsparameterwerte der Energie-Bereitstellungsvorrichtung (100) in dem zweiten Betriebsmodus indikativ sind; und

die Diagnoseinformationen an eine übergeordnete Steuerungsvorrichtung (120) zu senden.

2. Energie-Bereitstellungsvorrichtung (100) gemäß dem vorangehenden Anspruch, wobei die Bereitstellungseinrichtung (202)

(a) ein Stromgenerator, insbesondere ein Diesel-Generator,

(b) ein Heizkraftwerk, insbesondere ein Block-Heizkraftwerk, mit einer Stromerzeugungsturbine,

(c) eine Photovoltaikanlage,

(d) eine Windenergieanlage oder

(e) ein elektrischer Energiespeicher ist.

3. Energie-Bereitstellungsvorrichtung (100) gemäß einem der vorangehenden Ansprüche, ferner aufweisend eine Stromnetz-Überwachungseinheit (210), welche mit der Steuereinheit (204) gekoppelt ist und welche mit dem Stromnetz (150) an einem Messpunkt koppelbar ist.

4. Energie-Bereitstellungsvorrichtung (100) gemäß einem der vorangehenden Ansprüche, welche so eingerichtet ist, dass im zweiten Betriebsmodus lediglich eine Primärregelung und/oder eine Tertiärregelung erfolgt.

5. Energie-Bereitstellungssystem (110) aufweisend

zumindest zwei Energie-Bereitstellungsvorrichtungen (100) gemäß einem der vorangehenden Ansprüche und

eine übergeordnete Steuerungsvorrichtung (120), welche über eine Kommunikationsverbindung (122) mit den Energie-Bereitstellungsvorrichtungen (100) kommunikativ gekoppelt ist, so dass, sofern die Kommunikationsverbindung (122) intakt ist, die externen Steuersignale von der übergeordneten Steuerungsvorrichtung (120) an die jeweilige Steuereinheit (204) der Energie-Bereitstellungsvorrichtungen (100) übertragbar sind.

6. Verfahren zum Bereitstellen von elektrischer Leistung für an einem Stromnetz (150) angeschlossene elektrische Verbraucher (170) mittels einer Bereitstellungseinrichtung (202) einer Energie-Bereitstellungsvorrichtung (100), das Verfahren aufweisend Überwachen, ob externe Steuersignale von einer Schnittstelle (206) der Energie-Bereitstellungsvorrichtung (100) empfangen werden; und

falls für eine vorbestimmte Zeitspanne kein externes Steuersignal oder kein gültiges externes Steuersignal von der Schnittstelle (206) empfangen und an eine Steuereinheit (204) der Energie-Bereitstellungsvorrichtung (100) weitergeleitet wurde,
Überführen der Bereitstellungseinrichtung (202) von einem ersten Betriebsmodus in einen zweiten Betriebsmodus, wobei der zweite Betriebsmodus ein autarker Betriebsmodus ist, in welchem die Steuereinheit die Energie-Bereitstellungsvorrichtung unabhängig von den externen Steuersignalen steuert, und wobei in dem ersten Betriebsmodus die externen Steuersignale indikativ sind für die Art und Weise, wie die Bereitstellungseinrichtung (202) in dem ersten Betriebsmodus arbeitet;
**dadurch gekennzeichnet, dass** falls für eine weitere vorbestimmte Zeitspanne gültige externe Steuersignale empfangen werden:

Empfangen eines Diagnose-Startsignals durch die Steuereinheit;
Überführen der Energie-Bereitstellungsvorrichtung (100) von dem ersten Betriebsmodus in den zweiten Betriebsmodus;
Sammeln von Diagnoseinformationen, welche für Betriebsparameterwerte der Energie-Bereitstellungsvorrichtung (100) in dem zweiten Betriebsmodus indikativ sind; und
Senden der Diagnoseinformationen an eine übergeordnete Steuerungsvorrichtung (120).

7. Verfahren gemäß dem vorangehenden Anspruch, wobei die Steuereinheit (204) die Bereitstellungseinrichtung (202) im zweiten Betriebsmodus derart steuert, dass die Bereitstellungseinrichtung (202) dem Stromnetz (150) eine elektrische Leistung bereitstellt, welche in Bezug zu einer anderen elektrischen Leistung, die von einer anderen Bereitstellungseinrichtung (202) einer anderen Energie-Bereitstellungsvorrichtung (100) dem Stromnetz (150) bereitgestellt wird, ein vorbestimmtes Verhältnis aufweist.

8. Verfahren gemäß einem der beiden vorangehenden Ansprüche, ferner aufweisend
falls nach einer gewissen Zeit wieder gültige externe Steuersignale empfangen werden,
Überführen der Energie-Bereitstellungsvorrichtung (100) von dem zweiten Betriebsmodus in den ersten Betriebsmodus.

9. Verfahren gemäß dem vorangehenden Anspruch, wobei das Überführen von dem zweiten Betriebsmodus in den ersten Betriebsmodus erst nach einer vorgegebenen Verzögerungszeitspanne nach dem erneuten Empfang von gültigen externen Steuersignalen erfolgt.

10. Verfahren gemäß einem der vorangehenden Ansprüche 6 bis 9, ferner aufweisend
vor dem Überführen der Energie-Bereitstellungsvorrichtung (100) von dem zweiten Betriebsmodus in den ersten Betriebsmodus,
Parametrieren der Energie-Bereitstellungsvorrichtung (100) mit Parameterwerten, welche bei einem Übergang von dem zweiten Betriebsmodus in den ersten Betriebsmodus indikativ sind für die Art und Weise des Betriebs in dem ersten Betriebsmodus.

**Claims**

1. Energy supply device (100) comprising

a supply means (202) for supplying electric power for electrical loads (170) connected to a power grid (150);
a control unit (204), configured for controlling the operation of the supply means (202) in a first operating mode and in a second operating mode, wherein the second operating mode is an autonomous operating mode in which the control unit controls the energy supply device independently of external control signals;
an interface (206), configured for receiving and for routing the external control signals to the control unit, wherein the control signals are indicative of the manner in which the supply means (202) works in the first operating mode; and
a communication monitoring unit (208) which is coupled to the interface (206) and the control unit (204) and which is configured

(i) to monitor whether the external control signals are received by the interface (206), and
(ii) if, for a predetermined period of time, no external control signal or no valid external control signal was received by the interface (206), to transmit an operating mode control signal to the control unit (204) which induces the control unit (204) to operate the supply means (202) in the second operating mode;

**characterized in that**
the energy supply device is configured, if, for a further predetermined period of time, valid external control signals are received:

to receive a diagnosis start signal by means of the control unit;
to transition the supply means (202) from the first operating mode to the second operating mode;
to collect diagnosis information which is indicative of operating parameter values of the energy supply device (100) in the second operating mode; and
to transmit the diagnosis information to a superordinate control device (120).

2. Energy supply device (100) according to the preceding claim, wherein
the supply means (202) is

(a) a power generator, in particular a diesel generator,
(b) a combined heat and power plant, in particular a micro-CHP plant, comprising a power generation turbine,
(c) a photovoltaic system,
(d) a wind turbine system, or
(e) an electrical energy store.

3. Energy supply device (100) according to either of the preceding claims, furthermore comprising
a power grid monitoring unit (210) which is coupled to the control unit (204) and which can be coupled to the power grid (150) at a measurement point.

4. Energy supply device (100) according to one of the preceding claims, which is configured such that, in the second operating mode, only a primary regulation and/or tertiary regulation takes place.

5. Energy supply system (110) comprising

at least two energy supply devices (100) according to one of the preceding claims, and
a superordinate control device (120), which is coupled communicatively to the energy supply devices (100) via a communication link (122), so that, if the communication link (122) is intact, the external control signals from the superordinate control device (120) are transmittable to the respective control unit (204) of the energy supply devices (100) .

6. Method for supplying electric power for electrical loads (170) connected to a power grid (150) by means of a supply means (202) of an energy supply device (100), the method comprising

monitoring whether external control signals are received by an interface (206) of the energy supply device (100); and
if, for a predetermined period of time, no external control signal or no valid external control signal was received by the interface (206) and routed to a control unit (204) of the energy supply device (100),
transitioning the supply means (202) from a first operating mode to a second operating mode, wherein the second operating mode is an autonomous operating mode in which the control unit controls the energy supply device independently of the external control signals and wherein, in the first operating mode, the external control signals are indicative of the manner in which the supply means (202) works in the first operating mode;
**characterized by**

if, for a further predetermined period of time, valid external control signals are received:

receiving a diagnosis start signal by means of the control unit;
transitioning the energy supply device (100) from the first operating mode to the second operating mode;
collecting diagnosis information which is indicative of operating parameter values of the energy supply device (100) in the second operating mode; and
transmitting the diagnosis information to a superordinate control device (120).

7. Method according to the preceding claim, wherein the control unit (204) controls the supply means (202) in the second operating mode in such a way that the supply means (202) supplies electric power to the power grid (150) which has a predetermined ratio in relation to another electric power which is supplied to the power grid (150) by another supply means (202) of another energy supply device (100).

8. Method according to either of the two preceding claims, furthermore comprising,

if, after a certain time, valid external control signals are again received,
transitioning the energy supply device (100) from the second operating mode to the first operating mode.

9. Method according to the preceding claim, wherein
the transition from the second operating mode to the first operating mode takes place only after a predetermined delay time after the renewed reception of valid external control signals.

10. Method according to one of preceding Claims 6 to 9, furthermore comprising,
before transitioning the energy supply device (100) from the second operating mode to the first operating mode, parameterizing the energy supply device (100) with parameter values which, in the case of a transition from the second operating mode to the first operating mode, are indicative of the manner of operation in the first operating mode.

**Revendications**

1. Installation (100) de mise à disposition d'énergie comportant

un dispositif (202) de mise à disposition pour disposer de puissance électrique pour un consommateur (170) électrique raccordé à un réseau (150) de courant ;
une unité (204) de commande, conçue pour commander le fonctionnement du dispositif (202) de mise à disposition dans un premier mode de fonctionnement et dans un deuxième mode de fonctionnement, le deuxième mode de fonctionnement étant un mode de fonctionnement en autarcie, dans lequel l'unité de commande commande l'installation de mise à disposition d'énergie indépendamment de signaux de commande extérieurs ;
une interface (206), conçue pour recevoir et pour acheminer les signaux de commande extérieurs à l'unité de commande, les signaux de commande étant indicatifs de la manière et la façon dont le dispositif (202) de mise à disposition travaille dans le premier mode de fonctionnement ; et
une unité (208) de communication-contrôle, qui est reliée à l'interface (206) et à l'unité (204) de commande et qui est conçue

(i) pour contrôler si les signaux de commande extérieurs sont reçus par l'interface (206) et,
(ii) si pendant un laps de temps défini à l'avance aucun signal de commande extérieur ou aucun signal de commande extérieur valable n'a été reçu de l'interface (206), pour transmettre un signal de commande de mode de fonctionnement à l'unité (204) de commande qui fait que l'unité (204) de commande fait fonctionner le dispositif (202) de mise à disposition dans le deuxième mode de fonctionnement ;

**caractérisée en ce que** l'installation de mise à disposition d'énergie est conçue, si pendant un autre laps de temps défini à l'avance des signaux de commande extérieurs valables ont été reçus :

pour recevoir un signal de démarrage de diagnostic par l'unité de commande ;
pour faire passer le dispositif (202) de mise à disposition du premier mode de fonctionnement au deuxième mode de fonctionnement ;
pour collecter les informations de diagnostic, qui sont indicatrices de valeurs de paramètre de fonctionnement de l'installation (100) de mise à disposition d'énergie dans le deuxième mode de fonctionnement ; et pour envoyer les informations de diagnostic à un système (120) de commande supérieur hiérarchiquement.

2. Installation (100) de mise à disposition d'énergie suivant la revendication précédente, dans laquelle le dispositif (202) de mise à disposition est

(a) un générateur de courant, notamment un générateur diesel,
(b) une centrale de chauffage, notamment une centrale de chauffage bloc ayant une turbine de production de courant électrique,
(c) une installation photovoltaïque,
(d) une éolienne ou
(e) un accumulateur d'énergie électrique.

3. Installation (100) de mise à disposition d'énergie suivant l'une des revendications précédentes, comportant en outre une unité (210) de contrôle du réseau de courant, qui est reliée à l'unité (204) de commande et qui peut être reliée en un point de mesure au réseau (150) de courant.

4. Installation (100) de mise à disposition d'énergie suivant l'une des revendications précédentes, qui est conçue de manière à effectuer dans le deuxième mode de fonctionnement seulement une régulation primaire et/ou une régulation tertiaire.

5. Système (110) de mise à disposition d'énergie comportant

au moins deux installations (100) de mise à disposition d'énergie suivant l'une des revendications précédentes et un système (120) de commande supérieur hiérarchiquement, qui est relié par une liaison (122) de communication aux installations (100) de mise à disposition d'énergie de manière à ce que, dans la mesure où la liaison (122) de communication est intacte, les signaux de commande extérieurs puissent être transmis du système (120) de commande supérieur hiérarchiquement à l'unité (204) respective de commande des installations (100) de mise à disposition d'énergie.

6. Procédé pour disposer de puissance électrique pour un consommateur (170) électrique raccordé à un réseau (150) d'énergie au moyen d'un dispositif (202) de mise à disposition d'une installation (100) de mise à disposition d'énergie, le procédé comportant

le contrôle du point de savoir si des signaux de commande extérieurs sont reçus par l'interface (206) de l'installation (100) de mise à disposition d'énergie ; et

si, pendant un laps de temps défini à l'avance, aucun signal de commande extérieur ou aucun signal de commande extérieur valable n'est reçu par l'interface (206) et n'a été acheminé à l'unité (204) de commande de l'installation (100) de mise à disposition d'énergie,
le passage du dispositif (202) de mise à disposition d'un premier mode de fonctionnement à un deuxième mode de fonctionnement, le deuxième mode de fonctionnement étant un mode de fonctionnement en autarcie, dans lequel l'unité de commande commande l'installation de mise à disposition de l'énergie indépendamment des signaux de commande extérieurs et dans lequel dans le premier mode de fonctionnement, des signaux de commande extérieurs sont indicateurs de la façon et de la manière dont le dispositif (202) de mise à disposition travaille dans le premier mode de fonctionnement ;

**caractérisé par**,
si pendant un autre laps de temps défini à l'avance, on reçoit des signaux de commande extérieurs valables :

la réception d'un signal de démarrage de diagnostic par l'unité de commande ;
le passage de l'installation (100) de mise à disposition de l'énergie du premier mode de fonctionnement au deuxième mode de fonctionnement ;
la collecte d'informations de diagnostic, qui sont indicatrices de valeurs de paramètre de fonctionnement de l'installation (100) de mise à disposition de l'énergie dans le deuxième mode de fonctionnement ; et
l'envoi des informations de diagnostic à un système (120) de commande supérieur hiérarchiquement.

7. Procédé suivant la revendication précédente, dans lequel l'unité (204) de commande commande le dispositif (202) de mise à disposition dans le deuxième mode de fonctionnement de manière à ce que le dispositif (202) de mise à disposition mette à disposition du réseau (150) de courant une puissance électrique, qui, par rapport à une autre puissance électrique, qui a été mise à disposition du réseau (150) de courant par un autre dispositif (202) de mise à disposition d'une autre installation (100) de mise à disposition d'énergie, a un rapport défini à l'avance.

8. Procédé suivant l'une des deux revendications précédentes, comportant en outre

   si après un certain temps, on reçoit à nouveau des signaux de commande extérieurs valables,
   le passage de l'installation (100) de mise à disposition d'énergie du deuxième mode de fonctionnement au premier mode de fonctionnement.

9. Procédé suivant la revendication précédente, dans lequel le passage du deuxième mode de fonctionnement au premier mode de fonctionnement n'a lieu qu'après un laps de temps de temporisation donné à l'avance après la réception à nouveau de signaux de commande extérieurs valables.

10. Procédé suivant l'une des revendications 6 à 9 précédentes, comportant en outre
    avant le passage de l'installation (100) de mise à disposition d'énergie du deuxième mode de fonctionnement au premier mode de fonctionnement,
    le paramétrage de l'installation (100) de mise à disposition de l'énergie par des valeurs de paramètre, qui, lors du passage du deuxième mode de fonctionnement au premier mode de fonctionnement, sont indicatrices de la façon de fonctionner dans le premier mode de fonctionnement.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009036895 A2
- EP 2947743 A2